(19) Europäisches Patentamt

European Patent Office

Office européen des brevets

(11) Veröffentlichungsnummer: **0 291 694 B1**

(12) **EUROPÄISCHE PATENTSCHRIFT**

(45) Veröffentlichungstag der Patentschrift: **01.07.92**

(21) Anmeldenummer: **88105996.8**

(22) Anmeldetag: **14.04.88**

(51) Int. Cl.⁵: **H01P 5/18**

(54) **Richtkoppler.**

(30) Priorität: **17.04.87 AT 973/87**

(43) Veröffentlichungstag der Anmeldung:
**23.11.88 Patentblatt 88/47**

(45) Bekanntmachung des Hinweises auf die
Patenterteilung:
**01.07.92 Patentblatt 92/27**

(84) Benannte Vertragsstaaten:
**AT DE NL**

(56) Entgegenhaltungen:
**DE-A- 2 138 315       DE-A- 2 833 772**
**DE-A- 2 907 837       DE-A- 3 318 520**
**US-A- 4 211 986       US-A- 4 375 054**

**FREQUENZ, Band 39, Nr. 4, April 1985, Seiten
99-107, Berlin, DE; J. SIEGL et al.: "Entwurf
und Optimierung von planaren Richtkopplern mit verbesserter Richtwirkung"**

(73) Patentinhaber: **Siemens Aktiengesellschaft
Österreich
Siemensstrasse 88 - 92
A-1210 Wien(AT)**

(84) Benannte Vertragsstaaten:
**AT**

(73) Patentinhaber: **SIEMENS AKTIENGESELL-
SCHAFT
Wittelsbacherplatz 2
W-8000 München 2(DE)**

(84) Benannte Vertragsstaaten:
**DE NL**

(72) Erfinder: **Stockinger, Helmut
Russbergstrasse 20/3/3
A-1210 Wien(AT)**

## Beschreibung

Die Erfindung betrifft einen Richtkoppler in Mikrostriptechnik, bei dem eine Eingangsleitung und mehrere Ausgangsleitungen auf einer Seite einer Leiterplatte angebracht sind, deren andere Seite mit einem Metallbelag versehen ist und bei dem die Eingangsleitung mäanderförmig mit langen, die Koppelstrecken bildenden Abschnitten und kurzen, dazu senkrecht verlaufenden Abschnitten einer Streifenleitung besteht, wobei an den langen Abschnitten jeweils abwechselnd auf einer anderen Seite der Eingangsleitung je eine am inneren Ende mit einem Abschlußwiderstand versehene und dort durch eine rechtwinkelige Abknickung parallel zur Ecke zwischen dem entsprechenden kurzen und langen Abschnitt der Eingangsleitung geführte Ausgangsleitung endet, deren anderes Ende als Ausgangsanschluß zwischen den mäanderförmigen Leitungsabschnitten der Eingangsleitung herausgeführt ist.

Die Qualität eines Richtkopplers wird einerseits durch eine geringe Dämpfung von der Eingangsleitung zu den Ausgangsleitungen erhöht, während anderseits in der umgekehrten Richtung eine hohe Signaldämpfung von einer Ausgangsleitung zur nächsten Ausgangsleitung erwünscht ist, um den Einfluß von Störsignalen, die in einem der an die Ausgänge angeschlossenen Geräte auftreten, auf die anderen Geräte gering zu halten. Dieses Ziel wird beispielsweise durch den in der AT-PS 379.920 ( = DE-A1 33 18 520) beschriebenen Richtkoppler mit Hilfe von Schlitzen in den Ausgangsleitungen erzielt.

Es ist eine Reihe von Richtkopplern bekannt, bei denen auf verschiedene Weisen versucht worden ist, die Koppelbedingungen zu optimieren:
Bei der Ausführung nach der US-PS 3 581 243 ist die Eingangsleitung im Koppelbereich durch dielektrische Medien besonders hoher Dielektrizität von den beiderseitigen Metallbelägen getrennt, so daß sich im Kopplungsbereich Stoßstellen ergeben. Dasselbe gilt für die US-PS 3 768 042 und besonders für die DE-OS 2 138 315.

Solche Stoßstellen ergeben sich aber auch dann, wenn der Metallbelag im Bereich der Kopplungsstelle gegenüber der Eingangsleitung eine Ausnehmung aufweist; dies ist bei den Ausführungen nach den folgenden Schriften der Fall: DE-OS 28 33 772, US-PS 4 375 054 und US-PS 3 575 674.

Einen Sonderfall in dieser Hinsicht bildet die Ausführung nach der US-PS 4 211 986, denn dort ist der Metallbelag im Kopplungsbereich abgesetzt und der Eingangsleiter in seiner Gestalt verändert und zwar in der Weise, daß spezielle Ansätze gebildet werden, die der Kompensation höherer Frequenzen dienen.

Bei der Ausführung nach der DE-OS 29 07 837 ist zwar im Kopplungsbereich eine Metallbelegung vorgesehen, die jedoch durch einen Spalt von dem gesamten übrigen Metallbelag getrennt ist. Es ergeben sich somit Unstetigkeiten des Wellenwiderstandes der Eingangsleitung am Spalt.

Einen weiteren Sonderfall hinsichtlich der Ungleichmäßigkeit der Wellenimpedanz längs des Eingangsleiters stellt der in der DE-AS 21 45 945 beschriebene Richtkoppler dar, bei dem eine senkrecht zu den Leiterbahnen zwecks Abstimmung verstellbare Metallplatte vorgesehen ist, die ebenfalls als Stoßstelle wirksam ist.

Die Erfindung hat sich die Aufgabe gestellt, eine geringe Bedämpfung der Eingangsleitung bei hoher Signaldämpfung zwischen den Ausgangsleitungen mit einfachen Mitteln zur erzielen. Erfindungsgemäß weist der Metallbelag unterhalt der rechtwinkeligen Abknickungen der Ausgangsleitungen rechtwinkelige Ausnehmungen auf, von denen sich je zwei Seiten an die inneren Kanten der jeweils eine Ecke bildenden Abschnitte der Eingangsleitung anschmiegen, wobei die kurze Seite der rechtwinkeligen Ausnehmung unterhalb der inneren Kante des kurzen Abschnittes und die lange Seite unterhalb der inneren Kante des langen Abschnittes der Eingangsleitung verläuft.

Die Erfindung beruht auf dem Gedanken, die Eingangsleitung an den Koppelstellen möglichst wenig zu bedämpfen, um vom ersten bis zum letzten Ausgang ein gleiches Angebot an abgebbarer Energie zu bekommen. Dies wird dadurch erzielt, daß der Wellenwiderstand über die ganze Länge der Eingangsleitung möglichst gleich verteilt gehalten wird, was wiederum durch die weitgehende Vermeidung von elektrisch wirksamen Stoßstellen erzielt wird. Der Wellenwiderstand des Eingansleiters ist wesentlich bestimmt durch seine kapazitive Kopplung (Kapazität pro Längeneinheit) mit dem Metallbelag auf der anderen Seite der Leiterplatte. Jede Änderung der Längskapazität entlang der Eingangsleitung bedingt eine Stoßstelle für die elektromagnetischen Wellen und somit Abstrahlungsverluste. Hinsichtlich dieses Merkmales also unterscheidet sich der Anmeldungsgegenstand von allen genannten Richtkopplern, denn bei keiner dieser bekannten Ausführungen ist die Eingangsleitung über ihre ganze Länge mit dem Metallbelag gleichmäßig verkoppelt.

Ein Optimum ergibt sich, wenn gemäß einem weiteren Merkmal der Erfindung die Gesamtlänge der (je zwei) Seiten aller Ausnehmungen, die mit den inneren Kanten der Eingangsleitung parallel geführt sind, etwa 20 % der Gesamtlänge der Eingangsleitung beträgt.

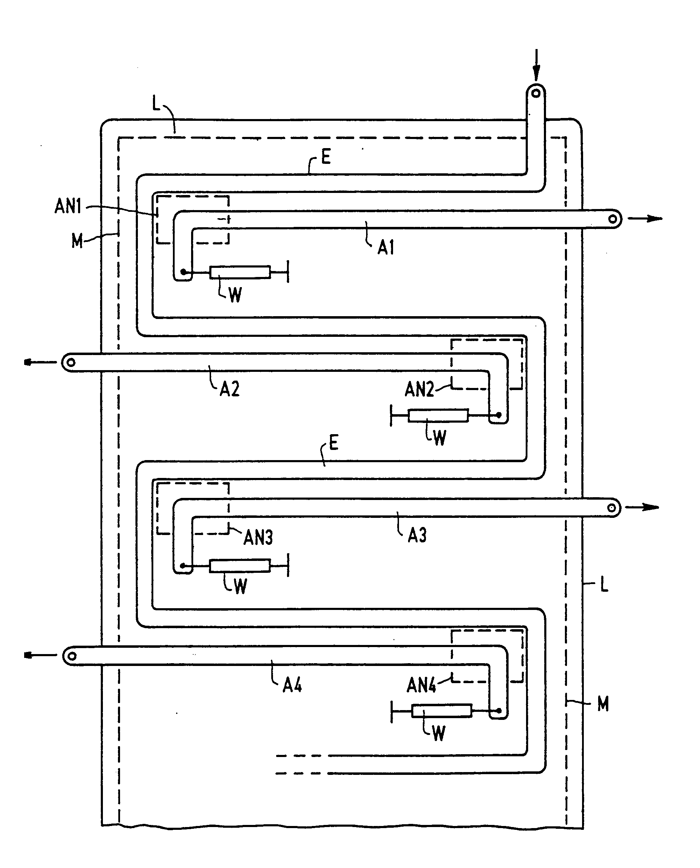

Ein Ausführungsbeispiel der Erfindung ist in der Zeichnung dargestellt.

Auf einer Leiterplatte L befindet sich die mit E bezeichnete Eingangsleitung eines Richtkopplers, die in halb so vielen Windungen verläuft, als Ausgangsleitungen A1, A2... vorhanden sind und zwar derart, daß mit jeder dieser Windungen je zwei der Ausgangsleitungen A1, A2... verkoppelt sind.

Auf ihrer Rückseite ist die Leiterplatte L mit einem Metallbelag M versehen, dessen Ränder mit strichlierten Linien angedeutet sind, da der Metallbelag M selbst in der gezeichneten Darstellung nicht sichtbar ist. Der Metallbelag M bedeckt die ganze Rückseite der Leiterplatte L bis auf einige, ebenfalls strichliert angedeutete Ausnehmungen AN1, AN2... an der Rückseite jener Stellen, an denen die Eingangsleitung E mit den entsprechenden Ausgangsleitungen A1, A2... im wesentlichen verkoppelt ist. Im Sinne einer optimalen Übertragung verlaufen die Ränder der Ausnehmungen AN1, AN2..., soweit sich der Metallbelag M mit der Eingangsleitung E deckt, parallel zu den Rändern der Eingangsleitung E. Mit W sind generell die Abschlußwiderstände der Ausgangsleitung bezeichnet. Die Signalflußrichtungen am Eingang der Eingangsleitung E und an den Ausgängen der Ausgangsleitung A1, A2... sind durch Pfeile angedeutet.

## Patentansprüche

1. Richtkoppler in Mikrostriptechnik, bei dem eine Eingangsleitung und mehrere Ausgangsleitungen auf einer Seite einer Leiterplatte angebracht sind, deren andere Seite mit einem Metallbelag versehen ist und bei dem die Eingangsleitung mäanderförmig mit langen, die Koppelstrecken bildenden Abschnitten und kurzen, dazu senkrecht verlaufenden Abschnitten einer Streifenleitung besteht, wobei an den langen Abschnitten jeweils abwechselnd auf einer anderen Seite der Eingangsleitung je eine am inneren Ende mit einem Abschlußwiderstand versehene und dort durch eine rechtwinkelige Abknickung parallel zur Ecke zwischen dem entsprechenden kurzen und langen Abschnitt der Eingangsleitung geführte Ausgangsleitung endet, deren anderes Ende als Ausgangsanschluß zwischen den mäanderförmigen Leitungsabschnitten der Eingangsleitung herausgeführt ist, **dadurch gekennzeichnet, daß** der Metallbelag unterhalb der rechtwinkeligen Abknickungen der Ausgangsleitungen (A1,A2...) rechtwinkelige Ausnehmungen (AN1,AN2...) aufweist, von denen sich je zwei Seiten an die inneren Kanten der jeweils eine Ecke bildenden Abschnitte der Eingangsleitung (E) anschmiegen, wobei die kurze Seite der rechtwinkeligen Ausnehmung (AN1,AN2...) unterhalb der inneren Kante des kurzen Abschnittes und die lange Seite unterhalb der inneren Kante des langen Abschnittes der Eingangsleitung (E) verläuft.

2. Richtkoppler nach Anspruch 1, **dadurch gekennzeichnet,** daß die Gesamtlänge der (je zwei) Seiten aller Ausnehmungen (AN1,AN2...), die mit den inneren Kanten der Eingangsleitung (E) parallel geführt sind, etwa 20 % der Gesamtlänge der Eingangsleitung (E) beträgt.

## Claims

1. Directional coupler in microstrip technology, in which an input line and a plurality of output lines are applied to one side of a circuit board, the other side of which is provided with a metal coating, and in which the input line, in the shape of a meander, consists of long sections, forming the coupling segments, and short sections, extending perpendicularly thereto, of a stripline, in which arrangement one output line each, provided with a terminating resistor at the inner end and guided there by a right-angled bend in parallel with the corner between the corresponding short section and long section of the input line, in each case ends at the long sections alternately on a different side of the input line, the other end of which output line is led out as output connection between the meander-shaped line sections of the input line, characterised in that the metal coating exhibits below the right-angled bends of the output lines (A1, A2...) rectangular recesses (AN1, AN2...), two sides of which in each case conform to the inner edges of the sections of the input line (E) in each case forming one corner, the short side of the rectangular recess (AN1, AN2...) extending below the inner edge of the short section and the long side extending below the inner edge of the long section of the input line (E).

2. Directional coupler according to Claim 1, characterised in that the total length of the (in each case two) sides of all recesses (AN1, AN2...), which are guided in parallel with the inner edges of the input line (E), is about 20% of the total length of the input line (E).

## Revendications

1. Coupleur directionnel réalisé selon la technique des microbandes, et dans lequel un conducteur d'entrée et plusieurs conducteurs de sortie sont disposés sur une face d'une plaquette à circuits imprimés, dont l'autre face comporte un revêtement métallique, et dans lequel le conducteur d'entrée possède une forme sinueuse et est constitué de longues sections, constituant les sections de couplage, et de courtes sections, perpendiculaires aux précédentes, d'un conducteur en forme de bande, et dans lequel à proximité des longues sections se termine, d'une manière alternée d'un autre côté du conducteur d'entrée, respectivement un conducteur de sortie, qui comporte, au niveau de l'extrémité intérieure, une résistance de terminaison et s'étend en cet endroit, en raison de la présence d'un coude à angle droit, parallèlement à l'angle entre les sections courte et longue correspondantes du conducteur d'entrée, et dont l'autre extrémité ressort sous la forme d'une borne de sortie entre les sections sinueuses du conducteur d'entrée, caractérisé par le fait que le revêtement métallique possède, au-dessous des coudes à angle droit des conducteurs de sortie (A1,A2...), des évidements rectangulaires (AN1,AN2...), dont respectivement deux côtés ont une forme adaptée aux bords intérieurs des sections, constituant respectivement un angle, du conducteur d'entrée (E), le petit côté de l'évidement rectangulaire (AN1,AN2...) s'étendant au-dessous du bord intérieur de la section courte et le grand côté de cet évidement s'étendant au-dessous du bord intérieur de la section longue du conducteur d'entrée (E).

2. Coupleur directionnel selon la revendication 1, caractérisé par le fait que la longueur totale des (respectivement deux) côtés de tous les évidements (AN1,AN2...), qui sont parallèles aux bords intérieurs du conducteur d'entrée (E), est égale approximativement à 20 % de la longueur totale du conducteur d'entrée (E).